Europäisches Patentamt

European Patent Office

Office européen des brevets

(11) Veröffentlichungsnummer: **0 199 372 B1**

## (12) EUROPÄISCHE PATENTSCHRIFT

(45) Veröffentlichungstag der Patentschrift: **18.03.92**

(21) Anmeldenummer: **86200057.7**

(22) Anmeldetag: **14.01.86**

(51) Int. Cl.⁵: **C08F 259/04**

Die Akte enthält technische Angaben, die nach dem Eingang der Anmeldung eingereicht wurden und die nicht in dieser Patentschrift enthalten sind.

(54) **Spritzbare Antidröhnmassen.**

(30) Priorität: **24.04.85 DE 3514753**

(43) Veröffentlichungstag der Anmeldung:
**29.10.86 Patentblatt 86/44**

(45) Bekanntmachung des Hinweises auf die Patenterteilung:
**18.03.92 Patentblatt 92/12**

(84) Benannte Vertragsstaaten:
**DE FR IT SE**

(56) Entgegenhaltungen:
**EP-A- 0 102 523      EP-A- 0 185 267**
**CH-A- 493 573        DE-A- 1 812 597**
**DE-A- 3 424 128      GB-A- 1 045 584**

**Ullmanns Encyklopädie der technische Chemie, 3 Auflage Bd 7, S. 645, 7. Absatz ; Bd 14, S. 212, 1. Absatz ; Bd 18, Seite 541, 4. Absatz**

**Römpps Chemie-Lexicon, 8 Auflage**

(73) Patentinhaber: **RÜTGERSWERKE AKTIENGE-SELLSCHAFT**
**Mainzer Landstrasse 217**
**W-6000 Frankfurt am Main 1(DE)**

(72) Erfinder: **Rühl, Karl, Dr.**
**Hochwaldstrasse 13**
**W-6350 Bad Nauheim(DE)**
Erfinder: **Bildner, Karlheinz**
**Odenwaldstrasse 32**
**W-6458 Rodenbach 1(DE)**

EP 0 199 372 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Antidröhnmassen, die bei Raumtemperatur spritzbar sind.

Es sind spritzbare Antidröhnmassen auf Basis von Bitumen oder Kunstharzdispersionen bekannt, die aber den Nachteil haben, daß sie nach Aufbringen trocknen oder ablüften müssen, was zu einem verzögerten Arbeitsablauf führt. Außerdem verspröden diese Massen sehr leicht und sind entweder in der Wärme nicht stabil oder in der Kälte nicht ausreichend flexibel und ihre Dämpfungseigenschaften sind nur in einem schmalen Temperaturbereich zufriedenstellend.

Desgleichen ist aus DE-A 18 12 597 eine als Antidröhnmasse verwendbare Masse bekannt, die neben PVC, Weichmacher, Polymerisationsinitiator, ggf. weiteren Zusätzen sowie einem Ester eines mindestens dreiwertigen Alkohols enthält, der an mindestens zwei Hydroxylgruppen mit einer $\alpha$-ß-ungesättigten, polymerisierbaren Mono- oder Dicarbonsäure verestert ist und noch mindestens eine freie Hydroxylgruppe trägt.

Eigene Untersuchungen zeigten jedoch, daß die Dämpfungseigenschaften dieser Masse gerade im technisch relevanten Temperaturbereich von 20 bis 60 °C nicht günstig sind.

Es war daher Aufgabe der Erfindung, spritzbare Antidröhnmassen bereitzustellen, die diese Nachteile nicht haben.

Die Aufgabe wird gelöst durch spritzbare Antidröhnmassen gemäß der Ansprüche 1 und 2.

Normale Plastisole, auch wenn sie mit Schwerspat und/oder Glimmer gefüllt sind, zeigen nur minimale Dämpfungseigenschaften, wenn sie als Masse auf ein Blech aufgebracht werden.

Es wurde überraschenderweise gefunden, daß sich die Dämpfungseigenschaften wesentlich verbessern, wenn Plastisole mit Trimethylolpropantriacrylat, einem peroxidischen Vernetzer und anorganischen Füllstoffen vermischt werden und diese Mischungen nach der Applikation bei höherer Temperatur vernetzt werden.

Diese Verbindung wird eingesetzt in einer Menge von 2,5 bis 15 Gew.-%, bezogen auf die Gesamtmasse. Es ist dabei von Vorteil, daß durch diesen großen Mengenbereich die Temperaturabhängigkeit der akustischen Eigenschaften über einen weiten Bereich variiert werden kann.

Zur Vernetzung der ungesättigten Verbindung werden den erfindungsgemäßen Massen peroxidische Verbindungen in üblichen Mengen (0,5 - 10 Gew.-%, bezogen auf die ungesättigten Verbindungen) zugegeben, wie sie üblicherweise zur Vernetzung der entsprechenden ungesättigten Verbindungen eingesetzt werden. Ebenfalls wichtig für die Dämpfungseigenschaften der Massen sind eingearbeitete anorganische Füllstoffe wie Kreiden, Ton, Schiefermehl, Graphit, Quarz usw., insbesondere jedoch Schwerspat und Glimmer in einer Menge von 30 - 75 Gew.%, bezogen auf die Gesamtmasse. Zur Einstellung der Viskosität der Massen enthalten diese gegebenenfalls Lösemittel und/oder Weichmacher. Ferner können diese Massen übliche Haftvermittler, Thixotropiermittel, Beschleuniger, Stabilisatoren und Korrosionsschutzmittel enthalten.

Die Massen können mit Mischgeräten hergestellt werden, die in der Dichtstoffindustrie üblich sind, wie z.B. mit Walzenstühlen, Planetenmischern oder Dissolvern.

Die Verarbeitung der Massen erfolgt durch Verspachteln, Streichen oder Aufspritzen mit üblichen Hochdruckspritzgeräten. Die Massen sind bei Raumtemperatur mehrere Monate lang lagerstabil. Nach dem Auftragen auf das Substrat werden die Massen vernetzt. Je nach verwendetem System einer mehrfach ungesättigten Verbindung mit einem peroxidischen Vernetzer lassen sich Vernetzungstemperaturen von 80 bis 180°C einstellen.

Beispiel

Eine Masse wird hergestellt durch Vermischen bei Raumtemperatur (Walzenstuhl) der folgenden Komponenten:

| | |
|---|---|
| 45 Gew.-Teile | handelsübliches PVC-Plastisol mit Phthalatweichmacher |
| 25 Gew.-Teile | Phthalatweichmacher |
| 30 Gew.-Teile | Trimethylolpropantriacrylat |
| 1 Gew.-Teil | tert. Butylperoxid |
| 20 Gew.-Teile | Glimmer |
| 80 Gew.-Teile | Schwerspat |

Die Masse ist mit einem Hochdruckspritzgerät spritzbar und vernetzt bei einer Temperatur ab 140°C zu einer festen, plastischen Masse mit guter Haftung auf Metall, lackiertem Metall und Kunststoffflächen.

Ein Metallblech wird mit einer 3 mm dicken Schicht mit der Masse beschichtet, bei 140°C 20 min lang vernetzt und anschließend akustisch vermessen.

Es werden Verlustfaktoren gemessen nach DIN 53 440 bei einer Frequenz von 140 Hz. Bei den einzelnen Temperaturen werden folgende Werte ermittelt:

| | |
|---|---|
| + 60 °C | 0,095 |
| + 40 °C | 0,12 |
| + 20 °C | 0,12 |
| + 0 °C | 0,076 |
| - 20 °C | 0,032 |

**Patentansprüche**

1.  Spritzbare Antidröhnmasse aus PVC-Plastisol, einem weiteren ungesättigten Monomeren, einem peroxidischen Vernetzer, anorganischen Füllstoffen und gegebenenfalls üblichen Weichmachern, Thixotropiermitteln, Beschleunigern, Lösemitteln, Haftvermittlern, Stabilisatoren und Korrosionsschutzmitteln, **dadurch gekennzeichnet,** daß sie als ungesättigtes Monomer 2,5 bis 15 Gew.-%, bezogen auf die Gesamtmasse Trimethylolpropantriacrylat enthält.

2.  Spritzbare Antidröhnmasse nach Anspruch 1, **dadurch gekennzeichnet,** daß sie als anorganische Füllstoffe Schwerspat und/oder Glimmer enthält, in einer Menge von zusammen 30 bis 75 Gew.-%, bezogen auf die Gesamtmasse.

**Claims**

1.  A sprayable antinoise composition containing PVC plastisol, an additional unsaturated monomer, a peroxide cross-linking agent, inorganic fillers and optionally usual plasticizer, thixotropic agents, accelerators, solvents, coupling agents, stabilizers and corrosion inhibitors, wherein the composition contains 2,5 to 17 % by weight, based on the total amount, trimethylolpropane triacrylate as unsaturated monomer.

2.  A sprayable antinoise composition set forth in claim 1, wherein the composition contains 30 to 75 % by weight, based on the total amount, heavy spar and/or mica as inorganic filler.

**Revendications**

1.  Masse insonorisante applicable par pulvérisation constituée par un plastisol PVC, un monomère insaturé additionnel, un réticulant peroxydique, des matières de charge minérales et éventuellement des plastifiants usuels, des agents thixotropes, des accélérateurs, des solvants, des promoteurs d'adhésion, des stabilisants et des agents anti-corrosion, caractérisée en ce qu'elle contient en tant que monomère insaturé 2,5 à 15% en poids de triacrylate de triméthylolpropane, rapportés à la masse totale.

2.  Masse insonorisante applicable par pulvérisation selon la revendication 1, caractérisée en ce qu'elle contient, en tant que matières de charge minérales, de la baryte et/ou du mica en une quantité au total de 30 à 75% en poids, rapportés à la masse totale.